Europäisches Patentamt

European Patent Office

Office européen des brevets

(19)

(11) Veröffentlichungsnummer: **0 173 274**
**B1**

(12) **EUROPÄISCHE PATENTSCHRIFT**

(45) Veröffentlichungstag der Patentschrift: 22.11.90

(51) Int. Cl.⁵: **H 04 Q 11/04**

(21) Anmeldenummer: 85110673.2

(22) Anmeldetag: 24.08.85

(54) Verfahren und Schaltungsanordnung zur Herstellung und zum Betreiben einer Zeitvielfach-Breitbandverbindung.

(30) Priorität: 28.08.84 DE 3431579

(43) Veröffentlichungstag der Anmeldung:
05.03.86 Patentblatt 86/10

(45) Bekanntmachung des Hinweises auf die
Patenterteilung:
22.11.90 Patentblatt 90/47

(84) Benannte Vertragsstaaten:
DE FR GB

(56) Entgegenhaltungen:
EP-A-0 156 339
DE-B-2 214 216
PROCEEDINGS OF THE INTERNATIONAL
SWITCHING SYMPOSIUM, 7.-11. Mai 1984,
Florence, "session 22B, paper 6", Seiten 1-8,
North Holland Publ. Co., Amsterdam, NL; J.L.
LUTTON et al.: "Traffic performance of multi-
slot call routing strategies in an integrated
services digital network"
INTERNATIONAL SWITCHING SYMPOSIUM,
25.-29. Oktober 1976, Kyoto, "session 411, paper
1", Seiten 1-8, IECE, Tokyo, JP; H. FUKINUKI et
al.: "Structure of time division switching
networks"

(73) Patentinhaber: ALCATEL N.V.
Strawinskylaan 537 (World Trade Center)
NL-1077 XX Amsterdam (NL)
(84) FR GB

(73) Patentinhaber: Standard Elektrik Lorenz
Aktiengesellschaft
Lorenzstrasse 10
D-7000 Stuttgart 40 (DE)
(84) DE

(72) Erfinder: Wöhr, Peter
Stuttgarter Strasse 138
D-7000 Stuttgart 30 (DE)
Erfinder: Schaefer, J. Christian
Schaucherstrasse 36
D-7254 Hemmingen (DE)

(74) Vertreter: Villinger, Bernhard, Dipl.-Ing. et al
Standard Elektrik Lorenz AG Patent- und
Lizenzwesen Postfach 30 09 29
D-7000 Stuttgart 30 (DE)

(56) References cited:
ELECTRICAL COMMUNICATION, Band 59, Nr.
1/2, 17. Dezember 1984, Seiten 131-136,
Heidenheim, DE; S.R. TREVES et al.: "System
12. Technique for wideband ISDN applications"

**Beschreibung**

Die Erfindung betrifft ein Verfahren zur Herstellung und zum Betreiben einer Zeitvielfach-Breitbandverbindung nach dem Oberbegriff des Hauptanspruchs und eine Schaltungsanordnung für eine Vermittlungsstelle zur Durchführung des Verfahrens.

Die CCITT empfiehlt in ihrer Recommandation Q.503 unter Punkt 4.2.3 "Services offered at bit rates requiring more than 64 kbit/s", Datenströme, deren Bitfolgefrequenz größer ist als die Bitfolgefrequenz des Datenstroms einer Fernsprechverbindung (64 kBit/s) in mehrere Datenströme aufzuteilen, deren Bitfolgefrequenz jeweils die Bitfolgefrequenz des Datenstroms einer Fernsprechverbindung nicht übersteigt. Die einzelnen Datenströme sollen dann jeweils durch zusätzliche Daten so ergänzt werden, daß die Bitfolgefrequenz aller Datenströme gleich ist wie bei einer Fernsprechverbindung. Jeder solche Datenstrom wird dann in einem eigenen Kanal, der sich ansonsten nicht von einem Fernsprechkanal unterscheidet, übertragen und auch vermittelt. Um die übertragenen und vermittelten Daten wieder in der ursprünglichen Reihenfolge zusammenfügen zu können, muß darauf geachtet werden, daß die Laufzeiten in den einzelnen Kanälen sich nicht unterscheiden. Die CCITT empfiehlt deshalb, daß außerhalb der Vermittlungsstellen für alle Kanäle der Übertragungsweg der gleiche sein soll ("the same multiplex"). Sie weist auch auf die Gefahr der Blockierung einer Vermittlungsstelle für den Fall hin, daß auch innerhalb der Vermittlungsstelle alle Kanäle den selben Weg nehmen. Weitere Einzelheiten läßt die genannte Empfehlung noch offen.

Durch die Art der Übertragung ist zunächst nur gewährleistet, daß innerhalb eines einzelnen Kanals die Information (Bitfolge) zeitlich nicht verändert wird (Bitintegrität). Selbst bei gleichlangen Weg innerhalb einer Zeitmultiplex-Vermittlungsstelle können die einzelnen Kanäle innerhalb der Vermittlungsstelle untereinander zeitlich vertauscht werden. Eine Möglichkeit die ursprüngliche Reihenfolge der Kanäle (Kanalintegrität) wieder herzustellen wird in der deutschen Patentschrift 26 05 066 beschrieben. Bei vielen Vermittlungsstellen, beispielsweise im System 12 der ITT, sind zwischen zwei ganz bestimmten Teilnehmern nicht nur unterschiedliche, sondern auch unterschiedlich lange Wege möglich. Wird nun eine Breitbandverbindung auf mehreren unterschiedlich langen Wegen geführt, so werden die einzelnen Kanäle untereinander noch zusätzlich um ein Vielfaches einer Rahmendauer versetzt. Um dies auszugleichen (Rahmenintegrität) muß bei einer solchen Breitbandverbindung jeder Kanal um ein bestimmtes Vielfaches einer Rahmendauer verzögert werden, bis alle Kanäle gleich lang verzögert sind.

Für den in etwa vergleichbaren Fall, daß über mehrere Vermittlungsstellen hinweg Rahmenversetzungen auftreten können, die am Ende der Verbindungsstrecke wieder auszugleichen sind, gibt die DE-B-2 214 216 ein Verfahren zum Verbindungsaufbau an, das mit dem im Oberbegriff des Hauptanspruchs genannten Verfahren vergleichbar ist. Die Anzahl der auszugleichenden Rahmenversetzungen wird aus der in den Kanälen gesendeten Nutzinformation ermittelt. Dies ist aufwendig und unsicher.

Aus J. L. Lutton et al: "Traffic Performance of Multi-Slot Call Routing Strategies in an Integrated Services Digital Network", Proceedings of the International Switching Symposium ISS '84 Florence, 7—11 May 1984, Session 22B, Paper 6, Pages 1—8, ist es auch bekannt, über die ganze Verbindung hinweg den einzelnen Zeitschlitzen eine "sequence information" hinzuzufügen, um Störungen der einmal gestellten ausgleichenden Verzögerungen erkennen und korrigieren zu können.

Die Erfindung gibt durch die Lehre des Hauptanspruchs ein Verfahren, bei dem diese Probleme gelöst sind, sowie durch die Lehre des Anspruchs 6 eine Schaltungsanordnung zur Durchführung dieses Verfahrens. Vorteilhafte Ausgestaltungen des erfindungsgemäßen Verfahrens sind den Unteransprüchen 2 bis 5 zu entnehmen.

Im folgenden wird die Erfindung anhand eines Ausführungsbeispiels unter Zuhilfenahme der beiliegenden Zeichnungen weiter erläutert.

Figur 1 zeigt die Lage der an einer Breitbandverbindung beteiligten Kanäle in verschiedenen Multiplexverbindungen innerhalb der Vermittlungsstelle.

Figur 2 zeigt den Aufbau einer erfindungsgemäßen Schaltungsanordnung (Ein- und Ausgang einer Vermittlungsstelle).

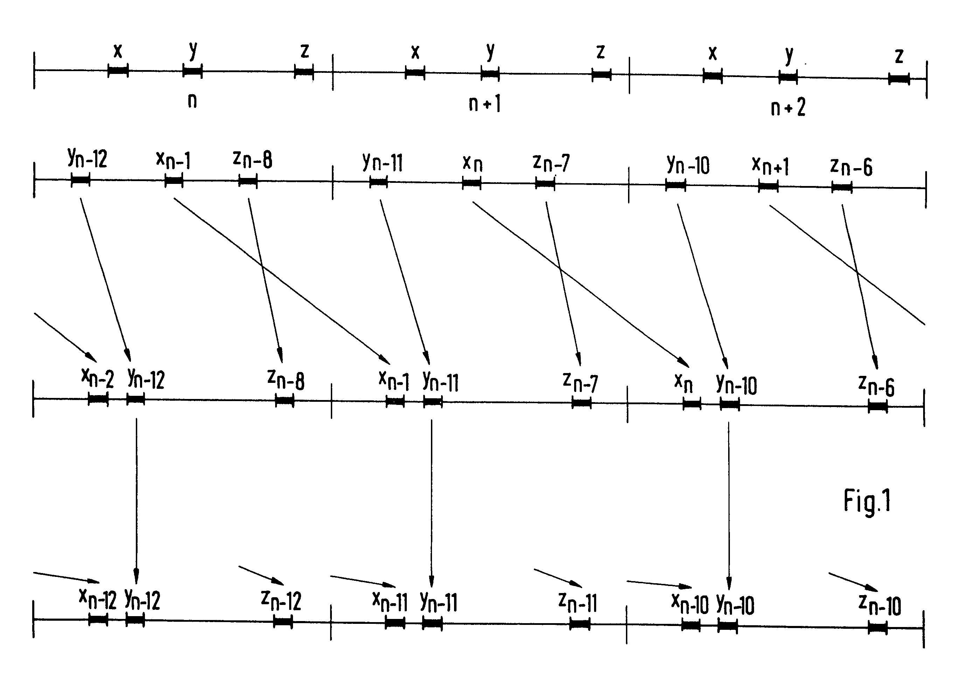

Figur 1 zeigt in der ersten Zeile drei aufeinanderfolgende Zeitvielfach-Rahmen n, n+1 und n+2 einer Zeitvielfach-Verbindung an einem Eingang einer Zeitvielfach-Vermittlungsstelle. Jeder Rahmen enthält eine Mehrzahl von Kanälen. Die Kanäle x, y und z enthalten die Dateninformation einer Breitbandverbindung. Die Breitbandinformation ergibt sich aus der Aufeinanderfolge der in den Kanälen x, y und z übertragenen Folge von Datenwörtern $x_n, y_n, z_n, x_{n+1}, y_{n+1}, \ldots$. Da die drei Kanäle x, y und z außerhalb der Vermittlungsstelle wieder auf einem gemeinsamen Weg weitergeleitet werden sollen, müssen sie an einem gemeinsamen Ausgang wieder in einer gemeinsamen Zeitvielfach-Verbindung zusammengefaßt werden, auch wenn sie innerhalb der Vermittlungsstelle auf getrennten Wegen geführt werden.

Die zweite Zeile der Figur 1 zeigt nun drei aufeinanderfolgende Rahmen am Ausgang der Vermittlungsstelle. Hier sind bereits alle auf derselben Ausgangsleitung abgehenden Kanäle zusammengefaßt, sie liegen jedoch nicht in der richtigen Zeitlage. Weiter liegen die drei an der Breitbandverbindung beteiligten Kanäle x, y und z nicht mehr in der ursprünglichen Reihenfolge im Zeitrahmen, sondern in einer dagegen veränderten Reihenfolge y, x, z. Außerdem sind die ursprünglich im selben Zeitrahmen zusammengefaßten Datenwörter nun auf verschiedene Zeitrahmen verteilt. Auch die übrigen Kanäle, die an dieser Zeitmultiplex-Verbindung beteiligt sind, sind noch nicht in ihrer endgültigen Zeitlage. Eine am Ausgang befindliche Zeitstufe muß deshalb noch alle Kanäle in ihre richtige Zeitlage bringen. Dabei werden auch die an der Breitbandverbindung beteiligten Kanäle innerhalb eines Zeitrahmens in die richtige Reihenfolge gebracht. Für die Kanäle x, y, z ist das Ergebnis dieser Umsortierung in der dritten Zeile dargestellt. Die Umsortierung ist durch Pfeile zwischen der zweiten und der dritten Zeile veranschaulicht. Damit ist zwar die erforderliche Kanalintegrität erreicht, noch nicht aber die ebenfalls notwendige Rahmenintegrität. In einem Rahmen sind gleichzeitig Datenwörter, die am Eingang der Vermittlungsstelle in unterschiedlich weit zurückliegenden Rahmen aufgetreten sind. Im Beispiel werden die Daten im Kanal x um zwei Rahmen verzögert, im Kanal y um zwölf Rahmen und im Kanal z um acht Rahmen.

Der Verbindungsaufbau bis an diese Stelle erfolgt nun so, daß für die drei an der Breitbandverbindung beteiligten Kanäle x, y und z drei voneinander unabhängige Verbindungen durch die Vermittlungsstelle aufgebaut werden. Dabei kann dann auch die richtige Reihenfolge der Kanäle im Zeitmultiplex-Rahmen am Ausgang vorgegeben werden.

Es gibt nun Vermittlungsstellen, bei denen die Wegesuche so erfolgt, daß der tatsächlich gefundene Weg und damit auch die Verzögerung auf diesem Weg nach außen nicht erkennbar wird. Damit können auch ohne zusätzliche Maßnahmen die Zeitdifferenzen nicht ermittelt und folglich auch nicht ausgeglichen werden. Bei einer Vermittlungsstelle im System 12 der ITT können im ungünstigsten Fall Laufzeitunterschiede von bis zu 12 Rahmendauern auftreten, die bei Breitbandverbindungen berücksichtigt werden müssen. Um die Laufzeitunterschiede ermitteln und ausgleichen zu können, werden nun beim Herstellen der Breitbandverbindung in den einzelnen beteiligten Kanälen x, y und z fortlaufende Rahmennummern übertragen. Die Zählung der Rahmennummern kann zwangsläufig nur bis zu einem bestimmten Höchstwert erfolgen und muß dann wieder von vorn beginnen. Ist dieser Höchstwert zu gering, dann kann die Auswertung nicht eindeutig erfolgen. Eindeutigkeit ergibt sich, wenn mindestens bis zu einem Wert gezählt wird, der gleich der doppelten Differenz zwischen der Laufzeit auf dem (zeitlich) längsten Weg durch die Vermittlungsstelle und der Laufzeit auf dem (zeitlich) kürzesten Weg durch die Vermittlungsstelle ist, jeweils gemessen in Vielfachen einer Rahmendauer, im vorliegenden Beispiel also gleich 24. Der binären Verarbeitung wegen werden die Rahmennummern von 0 bis 31 verwendet.

Der Datenstrom, der in der dritten Zeile der Fig. 1 dargestellt ist, wird nun in die Speicherzellen einer Zeitstufe eingeschrieben. Diese Zeitstufe weist soviele Speicherzellen auf, daß sie in der Lage ist, die Daten von 16 aufeinanderfolgenden Rahmen gleichzeitig zwischenzuspeichern. Es würde eigentlich genügen, nur 12, aufeinanderfolgende Rahmen speichern zu können. In der genannten Vermittlungsstelle werden in den einzelnen Kanälen jeweils Datenwörter zu je 16 Bit vermittelt. Davon sind 8 Bit für die eigentlichen Daten und 3 Bit für Prüf- und Protokollzwecke vorgesehen. Die verbleibenden 5 Bit werden nun verwendet, um ständig die Rahmennummern zu übertragen. Liegt nun am Ausgang mit Sicherheit ein kompletter Rahmen mit Rahmennummern in allen beteiligten Kanälen vor, so wird zunächst der Kanal ermittelt, bei dem die größte Laufzeit auftritt. Hierzu werden solange jeweils alle Rahmennummern um 1 erhöht und beim Erreichen der Zahl 32 wieder auf 0 zurückgesetzt, bis die niedrigste Rahmennummer bei 0 liegt und alle anderen den Wert 15 nicht überschreiten. Derjenige Kanal, der nun die Rahmennummer 0 trägt, weist die größte Laufzeit auf. Die Rahmennummern der übrigen Kanäle geben nun den Laufzeitunterschied gegenüber dem Kanal mit der größten Laufzeit an. Diese Rahmennummern geben damit auch an, um wieviele Rahmen die Daten der zugehörigen Kanäle verzögert werden müssen, damit alle zusammengehörigen Daten wieder im selben Rahmen erscheinen. Die Daten der einzelnen Kanäle werden anschließend um die so ermittelte Anzahl von Rahmendauern verzögert aus der Zeitstufe wieder ausgegeben. Damit ist die ursprüngliche Reihenfolge wieder hergestellt. Dies ist in der vierten Zeile der Fig. 1 und in den zwischen der dritten und vierten Zeile gezeichneten Pfeile dargestellt. Die Daten des Kanals y mit der größten Laufzeit werden unverzögert weitergegeben (senkrechte Pfeile), die Daten der übrigen Kanäle x und z werden unterschiedlich lange verzögert (unterschiedlich flache und damit unterschiedliche weit zurückweisende Pfeile).

Im oben ausgeführten Beispiel ist die Übertragung der Rahmennummern unabhängig von der Übertragung der eigentlichen Daten. Es ist deshalb auch möglich, die Rahmennummern ständig zu übertragen. Damit kann einerseits die Breitbandverbindung ständig überwacht werden, andererseits kann die Verbindungsaufnahme einfacher erfolgen, weil zum Zu— und Abschalten der Rahmennummern keine zusätzlichen Protokolle zwischen Eingang und Ausgang der Vermittlungsstelle erforderlich sind. Das erfindungsgemäße Verfahren ist aber auch dann anwendbar, wenn keine freien Stellen mehr verfügbar sind. In diesem Fall können dann die Rahmennummern während des Aufbaus der Breitbandverbindung an den Stellen übertragen werden, an denen später die Daten übertragen werden. Es genügt dann, die Rahmennummern nur kurzzeitig in — im obigen Beispiel — mindestens 12 aufeinanderfolgenden Rahmen zu übertragen. Die Umschaltung auf Daten kann zeitabhängig oder protokollgesteuert erfolgen. Es muß nur sichergestellt sein, daß in allen übertragenen Kanälen schon oder noch gültige Rahmennummern vorhanden sind.

Weiter kann das erfindungsgemäße Verfahren auch so abgewandelt werden, daß in der zusätzlich erforderlichen Zeitstufe nicht nur die Verzögerungen um Vielfache eines ganzen Rahmens erfolgen, sondern daß hier auch diejenigen Verzögerungen um Bruchteile eines Rahmens erfolgen, die erforderlich sind, um die an der Breitbandverbindung beteiligten Kanäle in die richtige Reihenfolge zu bringen.

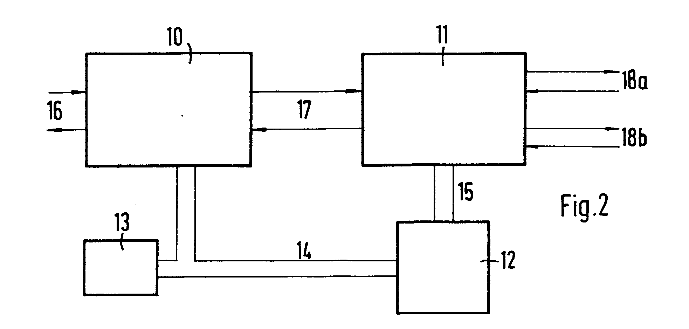

Anhand der Figur 2 wird nun kurz der Aufbau eines Ein- und Ausgangs einer Vermittlungsstelle beschrieben, der zusammen mit einem weiteren Eingang und einem weiteren Ausgang zum erfindungsgemäßen Herstellen und Betreiben von Breitbandverbindungen geeignet ist.

Eine Leitungseinheit 10 stellt über Verbindungsleitungen 16 in beiden Richtungen die Verbindung zwischen der Vermittlungsstelle und den angeschlossenen Teilnehmern oder einer anderen Vermittlungsstelle her. Die Leitungseinheit 10 ist über Datenleitungen 17 mit einer Zugangseinheit 11 verbunden. Die Zugangseinheit 11 ist die erste und in der Gegenrichtung die letzte Vermittlungsstufe. Über Datenleitungen 18a und 18b steht die Zugangseinheit 11 mit zwei Zweigen der Vermittlungsstelle in Verbindung. Die Leitungseinheit 10 und die Zugangseinheit 11 werden von einer Steuereinheit 12 über einen ersten Bus 14 bzw. einen zweiten Bus 15 gesteuert. Am ersten Bus 14 und damit auch an der Leitungseinheit 10 ist eine Speichereinheit 13 angeschlossen. Die Speichereinheit 13 bildet zusammen mit der Leitungseinheit 10 eine Zeitstufe, in der 16 vollständige Rahmen gleichzeitig zwischengespeichert werden können. Die von der Zugangseinheit 11 zur Leitungseinheit 10 kommenden Daten werden von der Steuereinheit 12 gesteuert, in die Speichereinheit 13 eingeschrieben und von dort aus wieder nach der erforderlichen Verzögerung ausgelesen und über die Leitungseinheit 10 auf die abgehende Verbindungsleitung 16 gegeben. Die Zugangseinheit 11, die auch der Vermittlung dient, weist hierzu eine Zeitstufe auf, in der bei Breitbandverbindungen die ursprüngliche Reihenfolge der einzelnen Kanäle wieder hergestellt wird (Kanalintegrität).

Die Steuereinheit 12 weist auch einen Zähler auf, der periodisch von 0 bis 31 zählt (Modulo-32-Zähler). Der Inhalt dieses Zählers wird über den zweiten Bus 15 und die Zugangseinheit 11 an den dafür vorgesehenen Stellen in den über die Datenleitungen 18a und 18b ins Innere der Vermittlungsstelle abgehenden Datenfluß eingefügt.

Im gezeigten Beispiel ist es möglich, über die Verbindungsleitungen 16 sowohl in ankommender, wie auch in abgehender Richtung Breitbandverbindungen zu führen. Es ist aber auch möglich, einzelne Ein- und Ausgänge nur für ankommende und andere nur für abgehende Breitbandverbindungen auszurüsten. Im Regelfall wird aber eine Vermittlungsstelle für Duplexverbindungen eingerichtet. Beim Verbindungsaufbau wird dann (quasi-) gleichzeitig auch in der Gegenrichtung in der oben beschriebenen Weise eine Breitbandverbindung hergestellt.

## Patentansprüche

1. Verfahren zur Herstellung und zum Betreiben einer Zeitvielfach-Breitbandverbindung zwischen einem Eingang und einem Ausgang einer Zeitvielfach-Vermittlungsstelle, wobei für eine Breitbandverbindung jeweils mehrere (Schmalband-)-Kanäle innerhalb eines Zeitvielfach-Rahmens belegt werden, bei dem

für die einzelnen, an der Breitbandverbindung beteiligten Kanäle (x, y, z) unabhängig voneinander Verbindungen durch die Vermittlungsstelle aufgebaut werden;

am Ausgang der Vermittlungsstelle die ankommenden Daten mindestens der an der Breitbandverbindung beteiligten Kanäle (x, y, z) in Speicherzellen einer Zeitstufe (10, 13) eingeschrieben werden, die in der Lage ist, den Inhalt von k aufeinanderfolgenden Rahmen gleichzeitig zwischenzuspeichern, wobei k mindestens gleich der Differenz zwischen der Laufzeit auf dem (zeitlich) längsten Weg durch die Vermittlungsstelle und der Laufzeit auf dem (zeitlich) kürzesten Weg durch die Vermittlungsstelle ist, jeweils gemessen in Vielfachen einer Rahmendauer;

der Kanal (y) ermittelt wird, bei dem die größte Laufzeit auftritt und bei dem für alle beteiligten Kanäle (x, y, z) ermittelt wird, um welches Vielfache einer Rahmendauer die Laufzeit geringer ist als bei dem Kanal (y), bei dem die größte Laufzeit auftritt;

und die Daten der beteiligten Kanäle (x, y, z) um soviele Rahmen später der Zeitstufe (10, 13) wieder entnommen werden, wie dies ihrem jeweiligen zeitlichen Abstand zum Kanal (y) mit der längsten Laufzeit entspricht, dadurch gekennzeichnet,

daß am Eingang der Vermittlungsstelle den Zeitvielfach-Rahmen durch einen Modulo-2k-Zähler fortlaufende Rahmennummern zugeteilt werden,

daß anschließend an den Aufbau der Verbindungen durch die Vermittlungsstelle in den beteiligten Kanälen (x, y, z) in mindestens k aufeinanderfolgenden Rahmen die Rahmennummern an den Ausgang der Vermittlungsstelle übertragen werden;

und daß die Ermittlung des Kanals (y), bei dem die größte Laufzeit auftritt, und der Laufzeitunterschiede für die anderen Kanäle (x, z) aus den an den Ausgang übertragenen und in die Zeitstufe (10, 13) eingeschriebenen Rahmennummern erfolgt.

2. Verfahren nach Anspruch 1, dadurch gekennzeichnet, daß die Übertragung der Rahmennummern zu Beginn der Verbindung an denjenigen (Bit-)Stellen der beteiligten Kanäle (x, y, z) erfolgt, an denen während der anschliessenden laufenden Verbindung die Daten übertragen werden.

3. Verfahren nach Anspruch 1, dadurch gekennzeichnet, daß die Übertragung der Rahmennummern ständig an solchen (Bit-)Stellen der beteiligten Kanäle (x, y, z) erfolgt, die nicht der Übertragung von Daten dienen.

4. Verfahren nach Anspruch 3, dadurch gekennzeichnet, daß die Rahmennummern auch in den nicht an einer Breitbandverbindung beteiligten Kanälen übertragen werden.

5. Verfahren nach einem der Ansprüche 1 bis 4, dadurch gekennzeichnet, daß Verzögerungen um weniger als eine Rahmendauer, die erforderlich sind, um innerhalb der Rahmen die ursprüngliche Reihenfolge der Kanäle (y, x, z → x, y, z) wieder zu erhalten, in einer weiteren, vorzugsweise einer ohnehin vorhandenen Zeitstufe (11) durchgeführt werden.

6. Schaltungsanordnung für einen Ein- und Ausgang einer Vermittlungsstelle zur Herstellung und zum Betreiben von Zeitvielfach-Breitbandverbindungen, die jeweils mehrere (Schmalband-)-Kanäle innerhalb eines Zeitvielfach-Rahmens belegen, dadurch gekennzeichnet, daß sie einen Modulo-2k-Zähler aufweist, daß sie eine Einrichtung aufweist, um den Zählerstand des Zählers in den zu vermittelnden Datenstrom einzufügen, daß sie eine Zeitstufe (10, 13) aufweist, die k Rahmen gleichzeitig zwischenspeichern kann, und daß der Zeitstufe (10, 13) eine Steuereinheit (12) zugeordnet ist.

**Revendications**

1. Procédé pour établir et exploiter une liaison à large bande et à partage de temps entre une entrée et une sortie d'un central téléphonique à partage de temps, respectivement plusieurs canaux (à bande étroite) étant occupés, pour une liaison à large bande, à l'intérieur d'une trame à partage de temps, procédé dans lequel:

pour les différents canaux (x, y, z) intervenant dans la liaison à large bande, des liaisons indépendantes l'une de l'autre sont établies par le central téléphonique;

à la sortie du central téléphonique, les données entrantes d'au moins les canaux (x, y, z) intervenant dans la liaison à large bande sont enregistrées dans les cellules de mémorisation d'un tampon d'adaptation temporelle (10, 13), qui est en mesure de mémoriser de façon intermédiaire et simultanément le contenu de k trames successives, k étant au moins égal à la différence entre le temps de parcours sur le trajet (temporellement) le plus long au travers du central téléphonique et le temps de parcours sur le trajet (temporellement) le plus court au travers du central téléphonique, cette différence étant à chaque fois mesurée en multiples d'une durée de trame;

on détermine le canal (y), pour lequel se produit le plus long temps de parcours et pour lequel, pour tous les canaux participants (x, y, z), on détermine de combien de durées de trame le temps de parcours est plus petit que pour le canal (y), dans lequel se produit le plus long temps de parcours;

et les données des canaux participants (x, y, z) sont ensuite extraites à nouveau du tampon de synchronisation (10, 13) au bout d'un nombre de trames correspondant à leur espacement temporel par rapport au canal (y) ayant le plus long temps de parcours, caractérisé en ce que,

à l'entrée du central téléphonique sont appliqués des numéros de trames définissant les trames en partage de temps par un compteur modulo-2k,

à la suite de l'établissement des liaisons au travers du central téléphonique dans les canaux participants (x, y, z) et dans au moins k-trames successives, les numéros de trames sont transmis à la sortie du central téléphonique;

et on détermine le canal (y), pour lequel se produit le plus long temps de parcours, ainsi que la différence des temps de parcours pour les autres canaux (x, z) à partir des numéros de trames transmis à la sortie et enregistrés dans le tampon d'adaptation temporelle (10, 13).

2. Procédé selon la revendication 1, caractérisé en ce que la transmission des numéros de trames est effectuée au début de la liaison établie avec les positions (2 bits) des canaux participants (x, y, z), auxquels sont transmises les données pendant la liaison établie à la suite.

3. Procédé selon la revendication 1, caractérisé en ce que la transmission des numéros de trames est effectuée constamment en des positions (2 bits) des canaux participants (x, y, z), qui ne servent pas à la transmission de données.

4. Procédé selon la revendication 3, caractérisé en ce que les numéros de trames sont également transmis dans les canaux ne participant pas à une liaison à large bande.

5. Procédé selon une des revendications 1 à 4, caractérisé en ce que des retardements de moins d'une durée de trame, qui sont nécessaires pour rétablir à l'intérieur de la trame la séquence initiale de canaux (y, x, z → x, y, z) sont établis dans un autre tampon de synchronisation (11), de préférence déjà existant.

6. Montage pour une entrée et une sortie d'un central téléphonique en vue de l'établissement et de l'exploitation de liaisons à bande large et à partage de temps, qui occupe chacune plusieurs canaux, à bande étroite, à l'intérieur d'une trame en partage de temps, caractérisé en ce qu'il comporte un compteur modulo-2k, en ce qu'il est pourvu d'un dispositif permettant d'insérer le compte du compteur dans le flux de données à transmettre, en ce qu'il comporte un tampon d'adaptation temporelle (10, 13), qui peut mémoriser de façon simultanée et intermédiaire k-trames et en ce que le tampon d'adaptation temporelle (10, 13) est associé à une unité de commande (12).

**Claims**

1. A method for setting up and operating a time-division multiplex broadband path between an input and an output of a time-division multiplex exchange, with a plurality of (narrow-band) channels within a time-division multiplex frame being occupied for each broadband call, in which

paths through the exchange are established independently of one another for the individual channels (x, y, z) involved in the broadband call;

at the output of the exchange, the incoming data of at least the channels (x, y, z) involved in the broadband call are written into storage cells of a time stage (10, 13) which is capable of simultaneously buffering the contents of k successive frames, k being equal to at least the difference between the transit time on the (chronologically) longest path through the exchange and the transit time on the (chronologically) shortest path through the exchange, measured in each case in multiples of a frame period;

the channel (y) is determined in which the longest transit time occurs and in which it is determined for all channels involved (x, y, z) by what multiple of a frame period the transit time is shorter than in the channel (y) in which the longest transit time occurs; and

the data of the channels involved (x, y, z) are taken again from the time stage (10, 13) so many frames later as corresponds to their respective distance in terms of time from the channel (y) with the longest transit time,

characterized in that consecutive frame numbers are assigned to the time-division multiplex frames at the input of the exchange by means of a modulo-2k counter, that, following the setting up of the paths through the exchange in the channels involved (x, y, z), the frame numbers are transmitted to the output of the exchange in at least k successive frames;

that the determination of the channel (y) in which the longest propagation delay occurs and of the differences in the propagation delays for the other channels (x, z) is effected from the frame numbers transmitted to the output and written into the time stage (10, 13).

2. The method according to Claim 1, characterized in that the frame numbers are transmitted at the beginning of the connection in those (bit) positions of the channels (x, y, z) involved in which the data will be transmitted during the subsequent ongoing connection.

3. The method according to Claim 1, characterized in that the frame numbers are constantly transmitted in those (bit) positions of the channels (x, y, z) involved which are not employed for transmission of data.

4. The method according to Claim 3, characterized in that the frame numbers are also transmitted in the channels which are not involved in a broadband call.

5. The method according to any one of Claims 1 to 4, characterized in that delays of less than one frame period which are required for restoration of the original sequence of the channels (y, x, z → x, y, z) within the frames are performed in a further time stage (11), preferably one that is present anyhow.

6. A circuit arrangement for an exchange for implementation of a method according to any of Claims 1 to 5, characterized in that a modulo-2k counter is provided, in that, at the inputs of the exchange that are equipped for broadband calls, means are provided for inserting the count of the counter into the data stream to be switched, in that time stages (10, 13) are disposed at the outputs that are equipped for broadband calls, with the means being able to simultaneously buffer k frames, and in that a control unit (12) is associated with each time stage (10, 13).

Fig.1

Fig.2